# FASCICULE DE BREVET EUROPEEN

(11) **EP 0 517 558 B1**
(45) Date de publication et mention de la délivrance du brevet: **01.10.1997**
(21) Numéro de dépôt: 92401316.2
(22) Date de dépôt: 14.05.1992
(51) Int. Cl.: G06F 9/46

(54) **Dispositif permettant d'accroître les performances d'un noyau d'exécutif temps réel associé à une structure multiprocesseur pouvant comprendre un nombre élevé de processeurs**
Vorrichtung zur Steigerung der Leistung eines einer Multiprozessorstruktur mit einer möglicherweise hohen Anzahl von Prozessoren zugeordneten Echtzeitsteuerprogrammkerns
Device for increasing the performance of a real-time executive kernel associated with a multiprocessor structure which may consist of a high number of processors

(30) Priorité: 04.06.1991 FR 9106900
(43) Date de publication de la demande: 09.12.1992
(73) Titulaire: SEXTANT AVIONIQUE, F-92366 Meudon la Forêt Cédex (FR)
(72) Inventeur: Ducateau, Michel, F-28120 Nogent-Le-Roi (FR); Sers, Jean-Marie, F-78140 Velizy (FR)
(74) Mandataire: de Saint-Palais, Arnaud Marie

(56) Documents cités:
- EP-A- 0 264 317
- MICROPROCESSING AND MICROPROGRAMMING. vol. 22, no. 1, Janvier 1988, AMSTERDAM NL pages 11 - 21; M. P. PAPAZOGLOU: 'A versatile kernel proposal for a multimicroprocessor system environment'
- SOFTWARE AND MICROSYSTEMS. vol. 1, no. 5, Août 1982, LONDON GB pages 128 - 134; G. C. SHOJA ET AL: 'A control kernel to support Ada intertask communication on a distributed multiprocessor computer system'
- OPERATING SYSTEMS REVIEW (SIGOPS). vol. 23, no. 3, Juillet 1989, NEW YORK US pages 158 - 172; V. P. HOLMES ET AL: 'A designer's perspective of the Hawk multiprocessor operating system kernel'

## Description

La présente invention concerne un dispositif pour l'optimalisation des performances de primitives temps réel d'un noyau d'exécutif temps réel sur des structures multiprocesseurs, notamment, mais non exclusivement, des structures multimicroprocesseurs embarquées à bord d'un aérodyne.

D'une manière générale, on sait que l'exécution d'un travail sur un ordinateur met en jeu des processeurs dont les échelles de temps sont très disparates. Il en résulte qu'un travail complexe unique ne peut pas utiliser efficacement l'ensemble des éléments d'une configuration. Il est alors possible d'en augmenter le rendement si l'on décompose ce travail en plusieurs travaux simples prêts à être exécutés.

Le rôle fondamental du noyau est donc de créer à partir de l'ordinateur nu, plusieurs machines virtuelles presque indépendantes les unes des autres. Il doit pour cela organiser le partage des différents éléments de la configuration (ou ressources) entre les travaux en cours. Il se charge ensuite de la gestion des entrées-sorties, d'une part, parce que les unités correspondantes font partie des ressources qu'il surveille, d'autre part, parce que les événements liés aux entrées-sorties provoquent en général des changements dans l'état des travaux en cours d'exécution. Enfin, le noyau prend en charge des fonctions auxiliaires (par exemple la gestion de la date et de l'heure).

D'une façon plus précise, le noyau élabore une (ou plusieurs) machine virtuelle qui présente habituellement les propriétés suivantes :
- c'est un multiprocesseur capable d'exécuter en simultanéité apparente plusieurs programmes ; pour cela, le système d'exploitation distribue le temps du processeur (ou des processeurs) d'instruction et la mémoire centrale entre des entités appelées "tâches", il peut également fournir des mécanismes de communication entre les tâches ;
- le noyau prend en charge le détail des opérations d'entrée-sortie, que ce soit en ce qui concerne leur ordonnancement dans le temps, la correction des erreurs ou la synthèse d'opérations complexes. Le langage de programmation de la machine virtuelle noyau se présente comme une extension du langage machine de l'ordinateur support, un mécanisme spécial permettant la création d'instructions nouvelles, appelées primitives dont le rôle est de demander l'intervention du noyau pour exécuter des opérations complexes. C'est en particulier à ce niveau que se situent les fonctions dites de temps réel qui permettent d'utiliser des dispositifs réservés au système.

La machine virtuelle noyau est accessible, d'une part, aux machines des niveaux supérieurs et, d'autre part, à travers ceux-ci à des tâches soumises par les utilisateurs.

Au-dessus du noyau, on trouve des sous systèmes servant à créer des tâches et à les soumettre au noyau pour exécution.

Une tâche matérialise, du point de vue du noyau, un travail à exécuter, c'est-à-dire la conjonction d'un programme et des données auxquelles il s'applique. Le contexte d'une tâche est alors l'ensemble des informations qui lui sont accessibles, qu'elle modifie ou qui peuvent influer sur son déroulement. Le programme d'une tâche ne peut pas distinguer deux situations de contexte identique. On peut donc interrompre une tâche en un point quelconque de son déroulement, puis la remettre en route plus tard, sans influer sur le traitement qu'elle effectue, à condition de restaurer son contexte dans l'état où il était au moment de l'interruption.

Du point de vue du noyau, une tâche peut être dans les deux états fondamentaux suivants :
- elle est active si elle est en cours d'exécution sur l'un des processeurs de la configuration ;
- elle est en attente dans le cas contraire. A ce titre, elle peut être en attente d'un événement si elle a sous-traité une opération à un autre élément de la configuration et attend que celle-ci soit terminée ; elle peut être également en attente d'une ressource si elle a besoin pour poursuivre d'une unité qui n'est pas disponible.

Une ressource est un composant d'un système informatique pouvant être isolément alloué à une tâche ; cette ressource est alors préemptible si elle est libérée sous le contrôle du système ou non préemptible si sa libération est sous le contrôle de la tâche utilisatrice.

Il s'avère que dans des systèmes à architectures multiprocesseurs et surtout multimicroprocesseurs, la réalisation de la machine virtuelle noyau par programmation d'un langage machine du système présente un certain nombre d'inconvénients liés notamment à la puissance des microprocesseurs (manque de puissance) qui conduisent à obtenir des performances médiocres (par exemple des temps d'exécution trop longs) qui sont incompatibles avec certaines applications et en particulier à des applications en temps réel par exemple du type de celles exploitées par les systèmes embarqués à bord des aérodynes, notamment pour l'aide au pilotage et à la navigation de ces aérodynes.

On rappelle à ce sujet que l'évolution rapide, durant ces dernières années, des performances des engins volants est due en grande partie à l'épanouissement de l'électronique numérique.

Or, il s'avère que cette électronique évolue dans un contexte temps réel sévère et que les tentatives de réalisation de noyau temps réel pris en compte au niveau logiciel ne répondaient qu'imparfaitement aux exigences d'un environnement temps réel du type avionique.

Tel est le cas notamment du dispositif décrit dans le brevet DE-A-3 105 527 qui met en oeuvre un noyau d'exécutif temps réel à l'aide d'une machine spécialisée et adaptée à accomplir des algorithmes exécutés dans les primitives dudit noyau.

Dans le but de supprimer ces inconvénients, on a déjà proposé, notamment par le brevet FR 86 13614 (EP-A-0 264 317), d'implémenter un noyau d'exécutif temps réel, à l'aide d'une machine microprogrammée et à logique câblée, spécifique des algorithmes exécutés dans les primitives du noyau. Cette machine est assimilable à un coprocesseur associé au système et dans lequel les objets gérés, qui peuvent consister en les tâches, les événements matériels et logiciels, les ressources et le temps, sont associés à une série de primitives de base pouvant être composées pour obtenir les primitives du noyau implanté sur le système pour une application déterminée, ces primitives constituant le noyau qu'utilisent les processeurs pour autoriser ladite machine à gérer les tâches permettant de réaliser les fonctions.

Ce système présente l'avantage de répondre spécifiquement aux exigences de l'informatique embarquée dans un environnement temps réel approprié et d'obtenir :
- des temps d'exécution de primitives temps réel plus courts sur des architectures multiprocesseurs,
- une indépendance machine (type de processeur),
- une réalisation matérielle embarquable (faible encombrement, faible consommation),
- une prise en compte des événements externes dans des temps minimum,
- une facilité d'implémentation de divers noyaux,
- une facilité d'interfaçage aux compilateurs de langage de haut niveau.

Il s'avère cependant que cette solution est limitée en performance du fait qu'elle met en oeuvre une machine unique à l'usage de tous les processeurs de la structure multiprocesseur.

L'invention a plus particulièrement pour but de s'affranchir de ce problème, de manière à accroître les performances du système.

Elle propose donc, à cet effet, un dispositif pour l'optimalisation des performances de primitives temps réel d'un noyau d'exécutif temps réel dans une structure multiprocesseurs comprenant plusieurs processeurs, ce dispositif comprenant un opérateur temps réel se comportant, vu d'un processeur de la structure, comme une zone mémoire, et comprenant des moyens pour l'émission et la réception des données à traiter, pour la génération des signaux de contrôle des échanges, pour la gestion du contexte temps réel des processeurs de la structure, pour associer aux objets gérés par un noyau, notamment les tâches, les événements matériels et logiciels, les ressources et le temps, une série de primitives, à raison d'une primitive à la fois, pour assurer la gestion de la ressource horloge et des ressources actives, pour gérer au moyen d'un ordonnanceur le contexte temps réel des processeurs de la structure en fonction d'une stratégie déterminée, cet ordonnanceur étant notamment prévu pour réveiller les tâches cycliquement, pour marquer des attentes sur délais, pour activer des tâches après délais, et pour décider le passage d'un état à un autre des tâches en fonction des primitives du contexte temps réel.

Selon l'invention, ce dispositif est caractérisé en ce que l'opérateur temps réel OTR est réalisé sous la forme d'une pluralité de circuits câblés identiques dénommés "circuits OTR", accessibles simultanément par l'un des processeurs de la structure, mais chacun associé à un seul de ces processeurs, ces circuits étant reliés entre eux par une liaison apte à transmettre un signal "accord" permettant d'assurer que l'opérateur temps réel n'exécute qu'une seule primitive à la fois, chaque circuit OTR comprenant un ordonnanceur apte à assurer la gestion des tâches uniquement du processeur qui lui est associé, ainsi que des événements et des ressources globales à la fonction OTR, cet ordonnanceur étant notamment prévu pour réveiller les tâches cycliquement, pour marquer des attentes sur délais, et pour activer les tâches après délais, l'opérateur OTR décidant le passage d'un état à un autre des tâches en fonction des primitives du contexte temps réel.

Dans un tel dispositif, chaque circuit OTR peut se trouver dans l'un des trois états suivants :
a) un premier état dans lequel il effectue le traitement d'une primitive demandée par un des processeurs de la structure,
b) un deuxième état dans lequel il effectue le traitement d'une demande locale interne au circuit ne concernant que les tâches dont il a la charge (échéance d'un délai ou arrivée d'un événement matériel),
c) un troisième état dans lequel il est en attente de traitement.

Par ailleurs, l'opérateur OTR est conçu de manière à n'accepter le traitement d'une primitive que si tous les circuits OTR sont en attente de traitement. Pour assurer aux processeurs l'accès exclusif à l'opérateur OTR, chacun des circuits OTR comprend un mécanisme de type "test and set" grâce auquel suite à une demande d'accès en lecture d'un processeur, à une adresse OTR particulière, l'opérateur OTR s'assure (grâce à la liaison émettant le signal spécifique ACCORD), que tous les circuits OTR sont en attente de traitement.

Si tous les circuits OTR sont en attente de traitement, le processeur reçoit la réponse "OTR libre" et peut envoyer le code et les paramètres de la primitive, l'opérateur OTR étant alors réservé à ce processeur jusqu'à la fin du traitement de la primitive.

De ce fait, aucun autre processeur ne pourra obtenir l'accord de l'opérateur OTR pour le traitement d'une primitive tant que le processeur ayant envoyé la primitive en cours de traitement et tous les processeurs sur lesquels cette primitive a provoqué un changement de tâche n'auront pas lu leur compte-rendu respectif.

Si au moins un des circuits OTR est en cours de traitement, le processeur reçoit la réponse "OTR occupé" et doit renouveler sa demande jusqu'à ce qu'il reçoive la réponse "OTR libre".

Du fait qu'un circuit OTR peut accepter un traitement (primitive ou traitement local) dès qu'il a terminé le traitement en cours, l'opérateur OTR pourra traiter en parallèle une primitive et plusieurs traitements locaux, ce qui constitue une amélioration importante des performances du système.

D'une façon plus précise, dans le dispositif précédemment décrit, l'échange entre la structure multiprocesseur et l'opérateur OTR s'effectue selon les modes suivants :
- la demande d'accès à l'opérateur OTR par le système pour le traitement d'une primitive, ce mode comprenant la vérification préalable par le système de la liberté d'accès à l'opérateur OTR, puis la réponse à cette vérification, par voie matérielle, de l'opérateur OTR au système,
- dans le cas où l'opérateur OTR est libre, l'envoi du code et des paramètres de la primitive à l'opérateur OTR par simple écriture à la zone d'adressage de l'opérateur OTR,
- l'exécution par l'opérateur OTR, après acquisition desdits codes et desdits paramètres, d'une séquence opératoire relative à la primitive, puis ensuite ;
- la décision par l'opérateur OTR, en fonction de cette primitive et du contexte temps réel :
   . d'élaborer la réponse au processeur qui a demandé la primitive,
   . d'interrompre les processeurs sur lesquels la primitive a provoqué un changement de tâche ; et
- la lecture de la réponse de l'opérateur OTR par le processeur ayant demandé la primitive et par les processeurs ayant reçu une interruption, cette lecture s'effectuant à l'adresse de l'opérateur OTR.

Par ailleurs, l'ordonnancement des tâches (algorithme de choix) est effectué par les composants OTR qui attribuent chacun, en fonction de la stratégie choisie, leur processeur associé à une de leurs tâches éligibles.

Par exemple, une stratégie à priorité consiste à donner le processeur associé à la tâche la plus prioritaire pouvant s'exécuter sur ce processeur.

Bien entendu, l'un des composants OTR peut interrompre son processeur associé lorsqu'une tâche plus prioritaire que la tâche en cours est élue.

Ceci se fait par l'émission d'une interruption vers le processeur concerné, le composant OTR se mettant ensuite en attente d'échange jusqu'à ce que le processeur soit à même de lire les paramètres lui indiquant la nouvelle tâche à exécuter.

Comme précédemment mentionné, les objets manipulés par l'opérateur OTR sont les tâches, les événements matériels et logiciels, les ressources et le temps. Les définitions de ces objets dans le cadre de l'invention sont données ci-après :

### Les tâches :

Une tâche est un programme à exécuter sur un processeur pour permettre la réalisation d'une fonction générale de l'application.

Pour commencer ou continuer son exécution, une tâche peut rencontrer des conditions temporelles, matérielles ou logicielles. Une condition fondamentale est que le processeur associé soit disponible, compte tenu des priorités pour le déroulement de la tâche.

Une tâche peut prendre différents états durant un cycle application. Ces états sont définis par un graphe de transition d'état et les transitions sont conditionnées par l'exécution des primitives rencontrées, les événements externes (ITₑₓₜ) et les événements temporels.

Elle possède des attributs qui la caractérisent et qui conditionnent également son déroulement :
- numéro de priorité,
- protections temporelles,
- etc...

### Les événements :

L'événement est un mécanisme qui assure la synchronisation soit entre une ou des tâches et l'environnement extérieur, soit entre plusieurs tâches.

Lorsque l'événement arrive, les tâches en attente de cet événement peuvent continuer leur exécution sous certaines conditions (processeur disponible, pas d'autre attente, ..).

Les événements logiciels gérés par un composant OTR sont de deux types :
- événement local connu seulement par le processeur associé (seules des tâches du processeur associé peuvent manipuler cet événement ou l'attendre),
- événement global que toute tâche de la structure multiprocesseur peut manipuler ou attendre.

Un certain nombre d'événements peuvent également être activés par matériel : la détection d'une transition sur l'une des broches d'entrée ITₑₓₜi déclenche un traitement local au composant produisant les mêmes effets que l'activation par une primitive de l'événement numéro i.

### Les ressources :

L'opérateur OTR manipule plusieurs types de ressources :
- les ressources actives ou processeurs,
- la ressource horloge,
- les ressources passives (élément du système, sous programme ou matériel non partageable).

Elles ne sont pas gérées identiquement :
- la ressource passive constitue le mécanisme de partage contrôlé de possession d'élément matériel ou logiciel,
- la ressource horloge et les ressources actives sont gérées par l'opérateur OTR mais elles ne sont pas manipulables directement par les primitives.

### Le temps :

L'horloge temps réel, référence dans un contrôle de processus, assure un déroulement correct de l'application et le respect des contraintes temporelles liées à l'environnement.

Le temps, géré par l'opérateur OTR, permet entre autre de réveiller les tâches cycliquement, de marquer les attentes sur délais ou d'activer les tâches après délais, et de réaliser des contrôles temporels sur chaque tâche (temps d'exécution, c'est à dire le temps où la tâche est dans l'état "en cours" ; temps d'échéance, c'est à dire le temps qui s'écoule entre l'activation et la terminaison d'une tâche).

La tâche peut être placée dans les cinq états suivants :

### Tâche morte

Une tâche morte est une tâche connue de l'application mais qui n'a pas d'attache avec son contexte de lancement. Lors d'une anomalie, les tâches ne peuvent plus s'exécuter. Elles ne sont plus gérées.

### Tâche dormante

La tâche possède tous les paramètres pour démarrer son application. C'est l'état normal d'une tâche ayant terminé son exécution ou venant d'être initialisée.

### Tâche éligible

Une tâche éligible est une tâche en attente de ressource active. Elle peut s'exécuter dès que l'ordonnanceur (partie de l'opérateur OTR qui décide des priorités de l'attribution d'un processeur pour une tâche en fonction de la priorité) l'a désignée pour prendre le contrôle du processeur associé.

### Tâche élue

Une tâche qui a obtenu la possession du processeur associé passe de l'état "éligible" à l'état "élue".

Elle peut être préemptée au profit d'une autre tâche suivant les critères choisis pour l'ordonnancement. Si la tâche rencontre au cours de son exécution une condition non satisfaite la concernant sur délai, sur ressource ou sur événement, elle abandonne le processeur au profit d'une autre tâche.

### Tâche suspendue

Une tâche élue qui rencontre une condition précitée non satisfaite se place dans l'état "suspendue".
La condition remplie, cette tâche passe dans l'état "éligible".
Une tâche peut être suspendue sur :
- délai,
- ressource,
- événement,
- cycle.

Selon d'autres particularités de l'invention :
a) les primitives associées aux tâches qu'utilise le processeur pour communiquer avec l'opérateur OTR sont indiquées ci-après avec entre parenthèses les objets qui leur sont associés :
   Activer (tâche) qui correspond au passage de l'état "dormante" à l'état "éligible" de la tâche.
   Se terminer (tâche) qui correspond au passage de l'état "élue" à l'état "dormante" de la tâche.
   Tuer (tâche) qui correspond au passage de tout état à l'état "morte" de la tâche (dans ce cas, la tâche n'est plus gérée par l'opérateur OTR).
   Consulter (tâche, attribut) qui donne une information sur les attributs de la tâche tels que sa priorité, son état, etc...
b) Les primitives associées aux ressources (non partageables par les processeurs) sont au moins les suivantes :
   Réserver (ressource) qui demande la prise de possession d'une ressource par une tâche. Dans ce cas, si la ressource est occupée, la tâche est placée dans l'état "suspendue".
      Par contre, si la ressource est libre, la tâche continue son exécution.
   Libérer (ressource) : cette primitive marque la fin de possession d'une ressource. A la suite de cette libération, la tâche peut être préemptée au profit d'une autre tâche plus prioritaire en attente de cette ressource.
   Test (ressource) qui permet de connaître l'état de la ressource.
c) Les primitives associées aux événements sont au moins les suivantes :
   Signaler (événement) : cette primitive crée une impulsion sur l'événement logiciel, par exemple la fin d'un calcul.
   Attendre (délai), attendre (événement) : ces primitives suspendent la tâche qui exécute la primitive, la tâche passant dans l'état "éligible" quand la condition est satisfaite.

Il existe divers types de primitives, à savoir :
- les primitives locales qui sont des primitives demandées par un processeur Pi et ne concernant que ce processeur Pi. (exemple : le processeur Pi demande l'activation d'une tâche Tj sur le processeur Pi),
- les primitives globales qui sont des primitives demandées par un processeur Pi et concernant tous les processeurs Pj de la structure multiprocesseur. (exemple : le processeur Pi demande la mise à l'état "arrivé" de l'événement global "EVK", ce qui peut réveiller des tâches sur n'importe quel processeur se la structure),
- les primitives distantes qui sont des primitives demandées par un processeur Pi et ne concernant qu'un autre processeur Pj (i différent de j) de la structure multi-processeur. (exemple : le processeur Pi demande l'activation d'une tâche TK sur le processeur Pj).

Selon un mode d'exécution de l'invention, chaque circuit OTR comprend au moins quatre automates spécialisés dans la gestion de certains objets temps réel, en particulier la gestion des tâches "éligibles" en attente de disponibilité de leur processeur, la gestion des échanges avec les processeurs, la gestion des délais, des cycles et de l'horloge temps réel, des files d'attente des ressources, de l'ensemble des tâches en attente d'événement et la prise en compte des interruptions externes, ces automates communiquant entre eux par des BUS internes au circuit OTR, interconnectés par un routeur dynamique sous contrôle du séquenceur contenu dans l'un desdits automates.

Ces circuits OTR pourront être éventuellement regroupés sur une même carte connectée au BUS commun reliant tous les processeurs de la structure, avec un interface commun sur le BUS. De même, chaque circuit OTR pourrait être installé sur la carte du processeur dont il gère les tâches, avec un interface au BUS commun : dans ce cas, lorsque le processeur associé accède à son circuit OTR, il passe par le BUS commun.

En outre, chaque circuit OTR pourrait être implanté sur la carte du processeur dont il gère les tâches, avec un interface au BUS local de manière à ce que, lorsqu'un processeur de la structure multiprocesseur exécute une primitive, il envoie ses paramètres au circuit OTR associé par le BUS local et simultanément aux autres circuits OTR par le BUS commun, la logique d'arbitrage du BUS commun assurant la prise de possession du BUS local de tous les circuits OTR au cours d'un accès unique.

Des modes de réalisation de l'invention seront décrits ci-après, à titre d'exemples non limitatifs, avec référence aux dessins annexés dans lesquels :
La figure 1 est un diagramme d'état des tâches avec indication des primitives qui leur sont associées ;
Les figures 2a, 2b et 2c sont des représentations schématiques illustrant trois modes de connexion possibles entre un opérateur temps réel selon l'invention et une architecture multiprocesseur ;
La figure 3 est une représentation schématique de l'architecture d'un composant OTR selon l'invention ;
La figure 4 représente un mode d'exécution d'une structure matérielle de l'un des automates du circuit OTR représenté figure 3 ;
La figure 5 est une représentation schématique de l'interface application/moniteur/OTR ;
Les figures 6a à 6d sont des diagrammes temporels permettant d'illustrer différents modes d'exécution de primitives, à savoir :
   - exécution d'une primitive distante avec changement de tâche (figure 6a),
   - exécution d'une primitive distante sur un processeur P1 avec changement de tâche et traitement local sur un processeur P2 avec changement de tâche (figure 6b),
   - exécution de deux traitements locaux, dont un avec changement de tâche (figure 6c),
   - exécution d'une primitive globale avec changement de tâche sur deux processeurs (figure 6d).

Dans la description qui va suivre :
- un composant OTR ou un circuit OTR est un composant électronique destiné à la gestion temps réel des tâches d'un seul processeur dit "processeur associé",
- l'opérateur OTR ou l'OTR est l'ensemble des composants OTR dont la fonction est la gestion temps réel de la structure microprocesseur (chaque composant OTR ne gère que les tâches de son "processeur associé" mais les ressources et certains événements sont globaux, c'est-à-dire connus de tous les processeurs),
- un traitement local est un traitement effectué par un composant OTR à la suite d'une cause interne (arrivée d'un événement matériel ou expiration de délais d'attente ou de protection) et non à la suite d'une demande de primitive. Ce traitement ne concerne donc que les tâches du processeur associé.

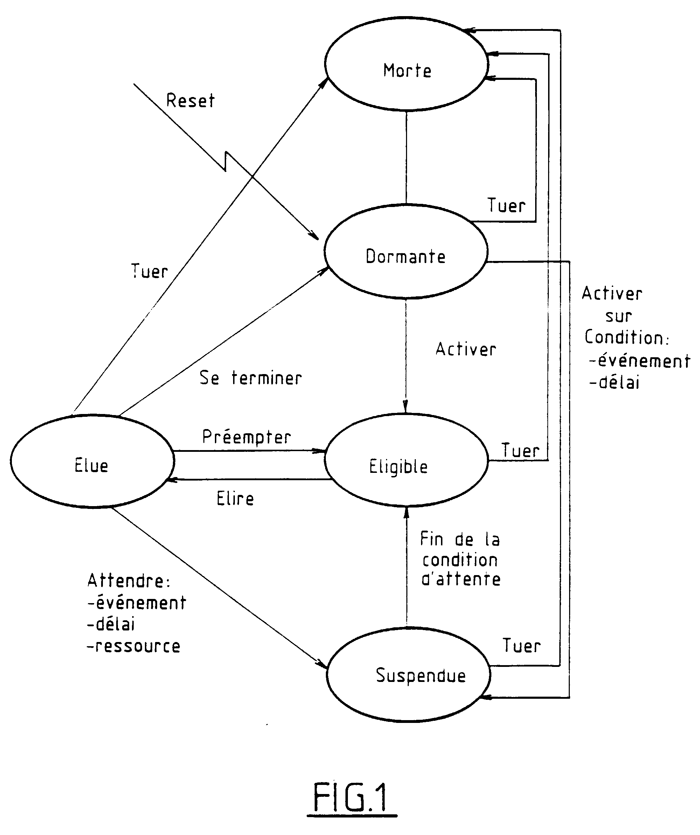

Le diagramme de la figure 1 permet de montrer les différents états que peut prendre une tâche ainsi que les transitions possibles entre ces états, transitions qui sont conditionnées par l'exécution des primitives rencontrées, les événements externes (interruptions) et les événements internes.

Comme on peut le constater, selon ce diagramme, il est possible de passer de l'état "élue" d'une tâche aux états "morte", "dormante", "éligible", "suspendue", respectivement par les primitives "tuer", "se terminer", "préempter", "attendre". De même, de l'état "suspendue", il est possible de passer à l'état "morte" ou à l'état "éligible" d'une tâche par les primitives "tuer" et par la "fin de condition d'attente" : de l'état "dormante", il est possible de passer à l'état "morte" ou à l'état "éligible" d'une tâche par les primitives "tuer" et "activer" ; et de l'état "éligible", il est possible de passer à l'état "morte" ou à l'état "élue" par les primitives "tuer" ou "élire".

Il convient de noter à ce sujet que l'appel à l'ordonnanceur en vue d'attribuer un processeur à une tâche éligible ne peut s'effectuer que :
- sur une transition d'état "suspendue" à "éligible" d'une tâche,
- sur une transition d'état "dormante" à "éligible" d'une tâche,
- sur une transition "élue" à "dormante" d'une tâche,
- sur une transition "élue" à "morte" d'une tâche, et
- sur une transition "élue" à "suspendue" d'une tâche.

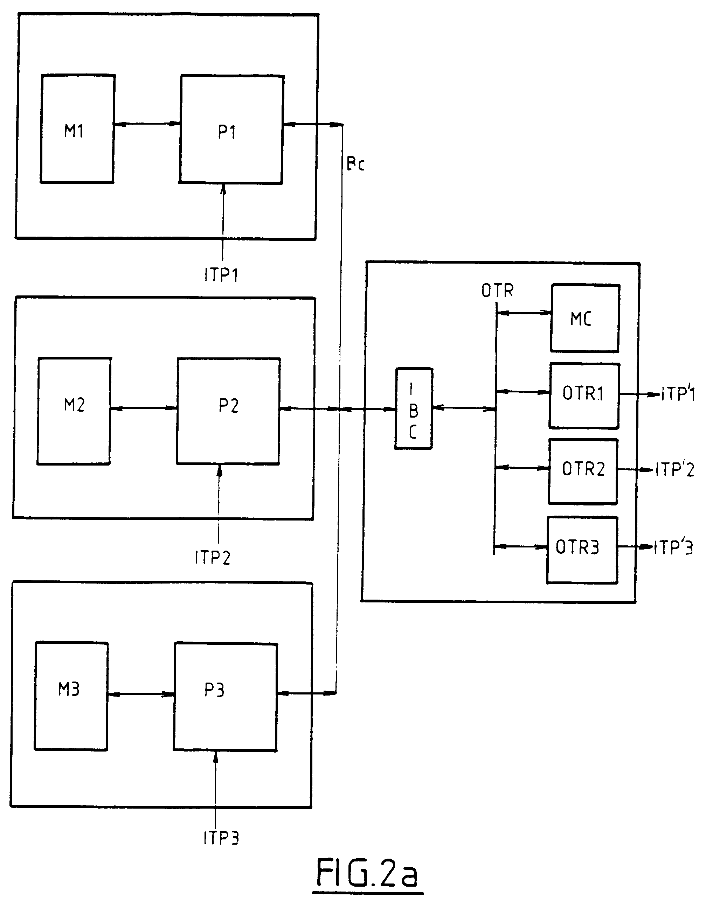

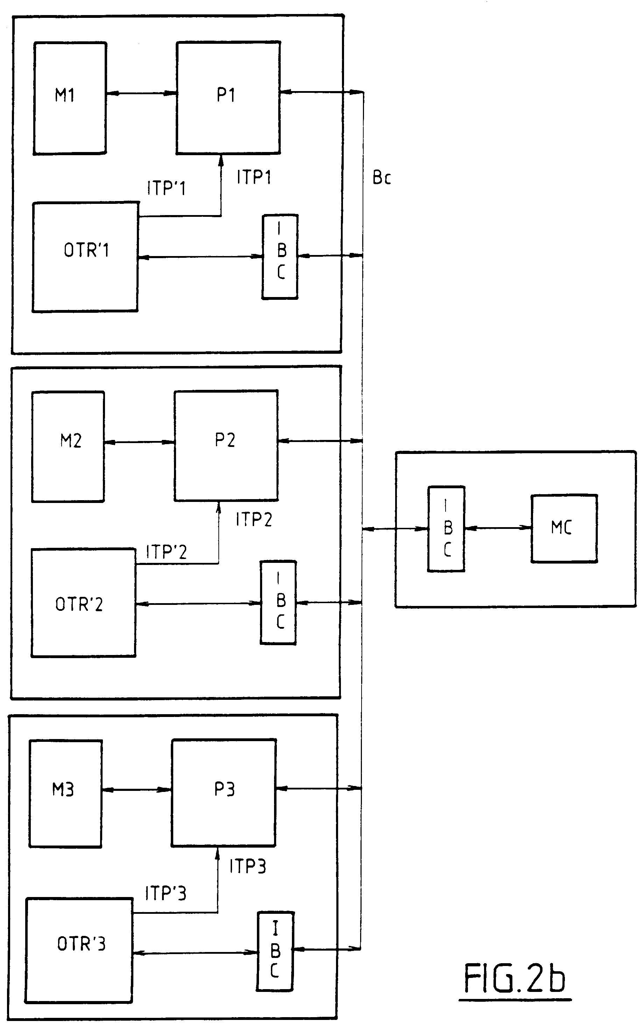

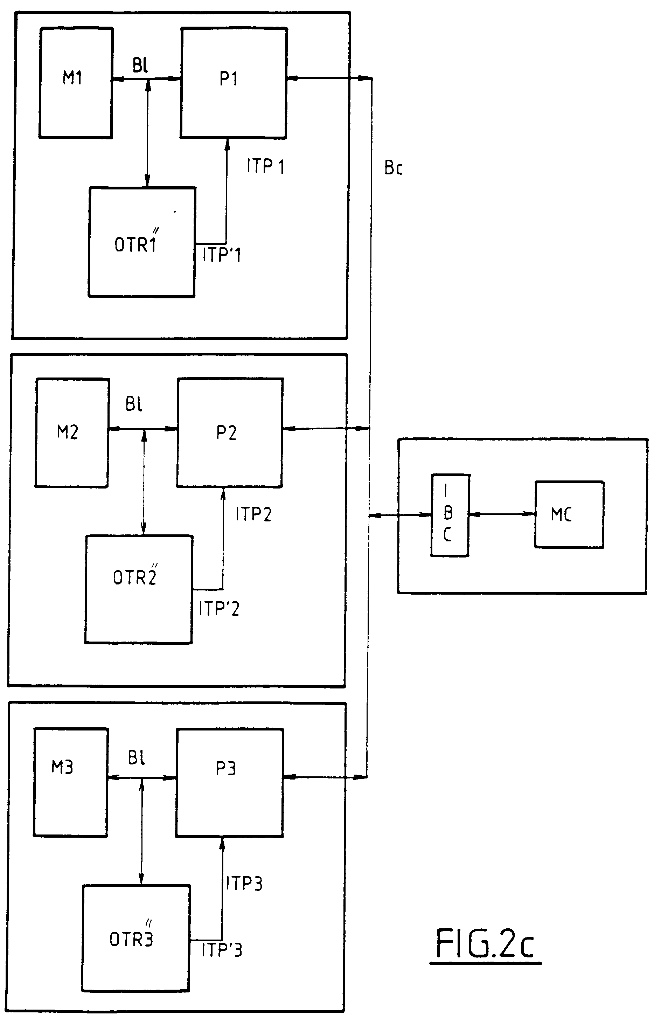

Telle que représentée sur les figures 2a, 2b et 2c, la structure multiprocesseur se compose de trois processeurs P1, P2, P3 respectivement associés à trois mémoires locales M1, M2, M3 et présentant chacun une entrée de commande des interruptions ITP1, ITP2, ITP3.

Ces trois processeurs P1, P2, P3 sont par ailleurs connectés à un BUS commun BC sur lequel peut être reliée une mémoire commune MC.

Dans l'exemple représenté figure 2a, sur le BUS commun BC est également connecté un opérateur temps réel OTR selon l'invention, par l'intermédiaire d'un interface IBC spécifique au BUS BC. L'opérateur OTR est ici composé de trois circuits OTR (OTR1, OTR2, OTR3) regroupés sur la même carte pouvant également recevoir la mémoire commune (OTR dit centralisé). Vu du processeur, cet opérateur se comporte comme une zone mémoire commune aux processeurs P1, P2, P3. Il possède les circuits nécessaires pour la reconnaissance d'adresse, l'émission et la réception des données à traiter, et la génération des signaux de contrôle des échanges. Il possède notamment trois sorties de contrôle des interruptions ITP'1, ITP'2, ITP'3 respectivement connectées aux trois entrées ITP1, ITP2, ITP3.

Dans l'exemple représenté figure 2b, sur le BUS commun BC est également connecté un opérateur temps réel OTR selon l'invention. L'opérateur OTR est ici composé de trois circuits OTR (OTR'1, OTR'2, OTR'3), chacun étant placé sur une carte processeur et connecté par l'intermédiaire d'un interface IBC spécifique au BUS BC. Vu du processeur, cet opérateur se comporte comme une zone mémoire commune aux processeurs P1, P2, P3. Il possède les circuits nécessaires pour la reconnaissance d'adresse, l'émission et la réception des données à traiter, et la génération des signaux de contrôle des échanges. Il possède notamment trois sorties de contrôle des interruptions ITP'1, ITP'2, ITP'3 respectivement connectées aux trois entrées ITP1, ITP2, ITP3.

Sur l'architecture multiprocesseur représentée figure 2c, est également connecté un opérateur temps réel OTR selon l'invention. L'opérateur OTR est ici composé de trois circuits OTR (OTR"1, OTR"2, OTR"3), chacun étant placé sur une carte processeur et connecté par l'intermédiaire d'un interface IB₁ spécifique au BUS local Bl. L'interface au BUS commun BC assure la prise de contrôle du BUS local lorsqu'un processeur envoie des paramètres aux circuits OTR par l'intermédiaire du BUS commun BC. L'opérateur possède les circuits nécessaires pour la reconnaissance d'adresse, l'émission et la réception des données à traiter, et la génération des signaux de contrôle des échanges. Il possède notamment trois sorties de contrôle des interruptions ITP'1, ITP'2, ITP'3 respectivement connectées aux trois entrées ITP1, ITP2, ITP3.

Les échanges entre l'un des processeurs P1, P2, P3 et l'opérateur OTR s'effectuent entre les trois types suivants :

### - La demande de primitive

L'opérateur OTR ne traitant qu'une seule primitive à la fois, tout processeur Pi désirant accéder à l'opérateur OTR doit au préalable vérifier qu'il est libre. A cet effet, le processeur Pi fait une lecture à une adresse OTR spécifique. Le composant OTRi reconnaît cet accès et demande alors aux autres composants OTRj, par l'intermédiaire du signal ACCORD, s'ils sont libres pour traiter une primitive. Le composant OTRi peut alors émettre sa réponse (OTR libre ou occupé) vers Pi. Cette suite d'opérations est faite au niveau de chaque composant par une logique indépendante de son séquenceur, de façon à ne pas perturber le déroulement d'une primitive qui serait en train d'être traitées à ce moment-là.

### - L'envoi du code et des paramètres

C'est une simple écriture à la zone d'adressage de l'opérateur OTR, après avoir vérifié que celui-ci est libre. Chaque composant OTRi est alors en attente de paramètre ; lorsque le processeur Pj écrit un paramètre à une adresse OTR, tous les composants OTRi acquièrent simultanément ce paramètre.

### - La lecture du compte-rendu de l'opérateur OTR

Il existe deux situations dans lesquelles un processeur Pi doit lire un compte-rendu élaboré par l'opérateur OTR :
a) Lorsqu'un processeur Pi a envoyé une primitive, il a besoin d'informations contenues dans l'opérateur OTR (actions à entreprendre : changement de tâche ; arrêt ; numéro de tâche à suspendre ou à élire ; compte-rendu d'exécution de primitive). L'accès à ces informations se fait par une lecture à l'adresse OTR. C'est le composant OTRj qui a traité la primitive qui émet la réponse, puisqu'il est le seul à connaître ces informations (dans le cas d'une primitive globale exécutée en parallèle par tous les composants OTR, c'est le composant OTRi associé au processeur Pi qui émet la réponse).
b) L'opérateur OTR peut interrompre un processeur Pi lorsque, à la suite d'un traitement local au composant OTRi ou d'une primitive distante ou globale demandée par le processeur Pj, une tâche plus prioritaire que la tâche en cours est "élue" sur le processeur Pi. Ceci se fait par l'émission d'une interruption ITPi par le composant OTRi vers le processeur associé Pi, le composant OTRi se mettant ensuite en attente d'échange jusqu'à ce que le processeur Pi soit à même de lire les paramètres lui indiquant la nouvelle tâche à exécuter.

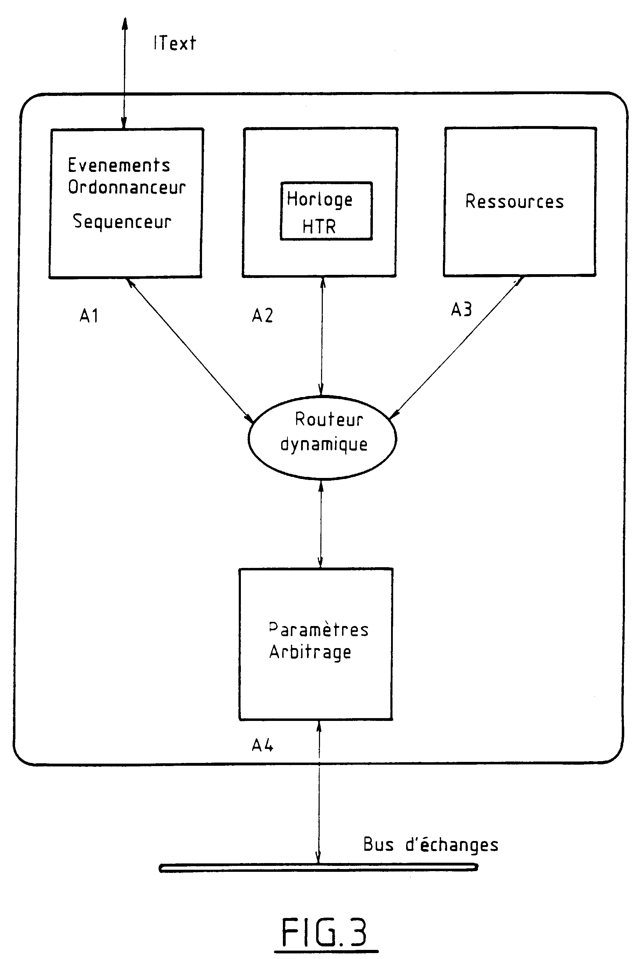

Tel que représenté sur la figure 3, le circuit OTR est composé d'au moins quatre automates, chacun étant spécialisé dans la gestion spécifique de certains objets temps réel :
- l'automate A1 peut gérer les tâches éligibles en attente de processeur, l'ensemble des tâches en attente d'événement. Il assure la prise en compte des interruptions externes. Il peut également superviser l'ensemble des traitements faits par les autres automates lors de l'exécution d'une primitive,
- l'automate horloge A2 peut gérer les délais, les cycles, les délais de protection (temps d'échéance et temps d'exécution) et l'horloge temps réel,
- l'automate A3 peut gérer les files d'attente des ressources et ,
- l'automate A4 peut gérer les échanges avec les processeurs et réaliser l'arbitrage entre des demandes de traitement interne à un circuit OTR et une demande de primitive présentée par un processeur.

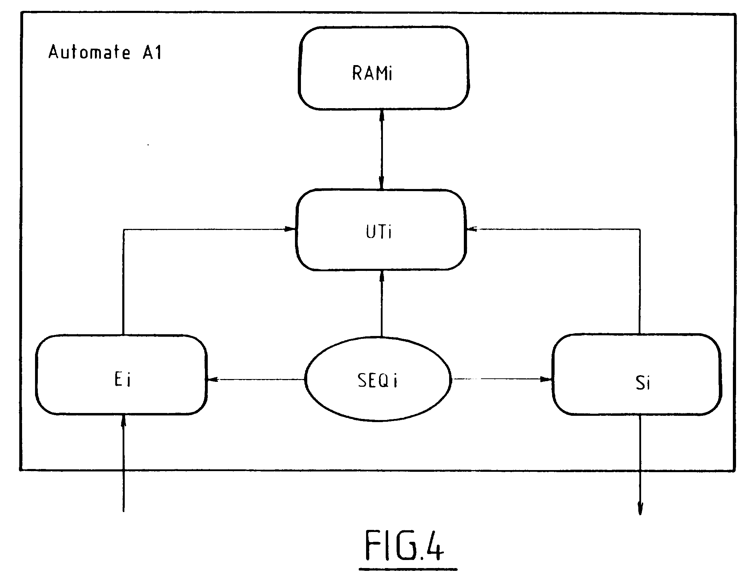

Chacun de ces automates comprend les ressources matérielles nécessaires aux traitements dont il a la charge. On peut y trouver, comme représenté figure 4, un séquenceur SEQi, une mémoire RAMi contenant des informations sur l'état temps réel du système, ainsi que de la logique câblée séquentielle et/ou combinatoire pour accélérer certains traitements.

Dans l'exemple de la figure 4, le séquenceur câblé SEQi pilote à la fois un registre d'entrée Ei, un registre de sortie Si et l'unité de traitement UTi associée à la mémoire RAMi.

Les connexions entre les sorties et les entrées de ces automates sont réalisées par un routeur dynamique.

L'opérateur OTR comprend en outre au moins un dispositif d'échange pouvant être asynchrone connectant le circuit OTR et l'interface IBC. Par ailleurs, le circuit OTR comprend des moyens pour émettre vers le processeur concerné un signal d'interruption, notamment lorsque l'algorithme de choix décide un changement de tâche sur ce processeur, changement consécutif à un traitement interne (délai ou événement matériel) ou à une primitive demandée par un processeur autre que celui dont le circuit OTR a la charge, ou bien encore à une exception temporelle (dépassement d'un temps d'échéance ou d'exécution, cycle sur une tâche non terminé), ce signal d'interruption restant actif tant que le processeur n'a pas accédé à l'opérateur pour lire le code de l'opération à effectuer.

L'automate A2 peut comporter une horloge temps réel HTR et une logique de comptage. L'horloge HTR présente une période programmable par appel d'une requête spécifique au circuit OTR ainsi qu'une logique de comptage.

Cette horloge HTR est conçue de manière à émettre un signal d'interruption horloge ITH pour le séquenceur de l'automate A2 afin de déclencher la mise à jour des compteurs associés à chaque tâche lorsqu'une période s'est écoulée. Ce signal d'interruption est prioritaire, de sorte qu'il sera pris en compte dès que l'automate A2 aura terminé l'opération en cours. L'automate A2 émettra un signal d'interruption vers l'automate A1 seulement lorsqu'il y aura des tâches à rendre éligibles.

L'automate A1 peut comprendre des entrées de contrôle d'interruption externe ITₑₓₜ ainsi que des moyens de mise en forme et de mémorisation de ces signaux d'interruption.

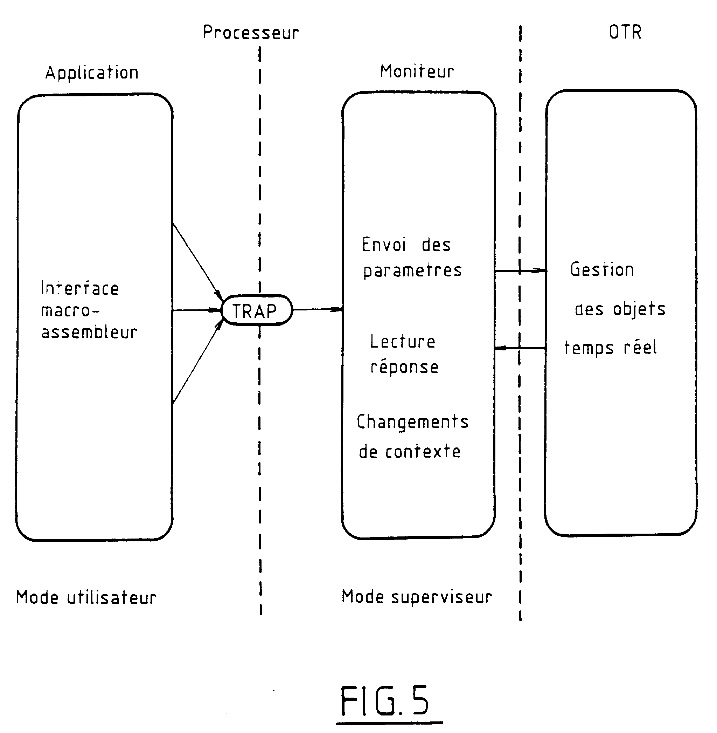

Dans le cadre d'une application, l'interface entre le processeur (mode utilisateur) et l'opérateur OTR est constitué par un moniteur (mode superviseur) selon un processus qui se trouve illustré sur la figure 5.

Pour un microprocesseur, l'entrée dans le moniteur se fait par une instruction TRAP. Cette instruction, permettant les appels système par une application, force une exception et réalise la commutation du mode utilisateur au mode système, dans lequel s'exécute tout le code appartenant au moniteur. L'ensemble du moniteur est alors écrit en assembleur.

Une requête au moniteur est constituée d'un groupe d'instructions assembleur, réalisant les fonctions suivantes :
- sauvegarde des registres nécessaires au passage des paramètres,
- chargement des paramètres dans les registres libérés, ou en mémoire RAM,
- entrée dans le moniteur TRAP,
- (exécution de la requête),
- après retour, restitution des registres utilisés.

Le moniteur étant l'interface entre le processeur et l'opérateur OTR, le code exécuté opère de la façon suivante :
- demande de primitive (teste si l'opérateur OTR est libre),
- envoi du ou des paramètres,
- lecture de la réponse indiquant l'opération à effectuer,
- éventuellement, changement de tâche,
- retour au programme utilisateur.

Il est à noter que le processeur n'est ininterruptible que pendant la phase de changement de contexte.

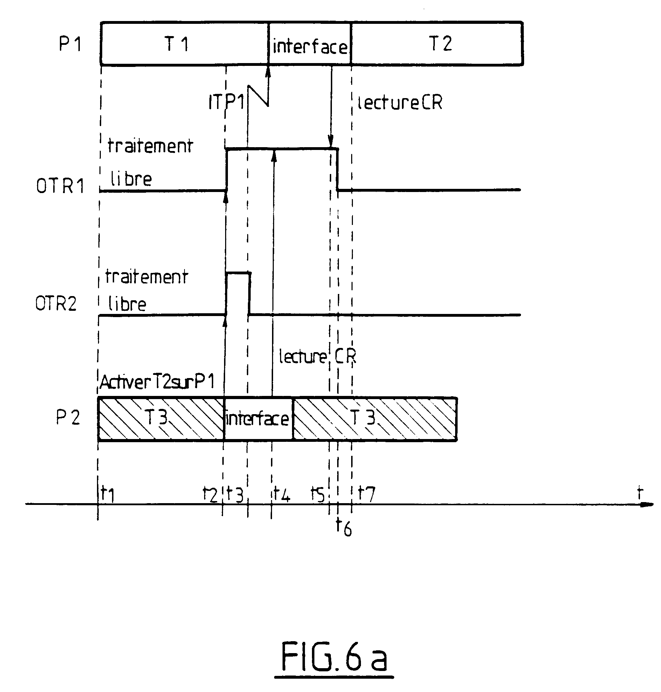

Dans les diagrammes temporels représentés sur les figures 6a à 6d, les tâches exécutées par les processeurs P1, P2 sont représentées sous la forme d'une succession de cases rectangulaires séparées par des interfaces tandis que l'état libre/traitement des circuits OTR1, OTR2 correspondant à ce processus, est indiqué en correspondance par des courbes crénelées.

Dans l'exemple représenté figure 6a, à l'instant t1, le processeur P1 exécute la tâche T1 tandis que le processeur P2 exécute la tâche T3. A un instant t2, la tâche T3 transmet à l'opérateur OTR une primitive en vue d'activer une tâche T2 sur le processeur P1.

Les deux composants OTR1, OTR2 commencent à traiter cette primitive (instant t2).

Le composant OTR2 analyse les paramètres envoyés par le processeur P2 et se rend compte que ce n'est pas lui qui gère la tâche T2 à activer : il repasse donc rapidement à l'état "libre" (instant t3).

Le composant OTR1 fait passer la tâche T2 à l'état "éligible" et détecte que la tâche T2 est plus prioritaire que la tâche T1 en cours sur le processeur P1 : il émet donc une interruption ITP1 vers le processeur P1 pour lui signaler un changement de tâche en cours. Le processeur P1 prend en compte l'interruption ITP1 (temps t4) et vient lire le compte-rendu (temps t5) lui indiquant de suspendre la tâche T1 et d'élire la tâche T2. A la suite de cette lecture, le composant OTR1 repasse à l'état libre (temps t6). Pendant ce temps, l'interface I1 réalise le changement de contexte, puis le processeur P1 commence à exécuter la tâche T2 (temps t7). Pendant ce temps, de façon indépendante du processeur P1, le processeur P2 est venu lire le compte-rendu de sa primitive d'activation (temps t4). Comme c'est le circuit OTR1 qui a traité la primitive, c'est lui qui va lui répondre un compte-rendu indiquant que la primitive s'est correctement déroulée. Après un interface I2, le processeur P2 va alors reprendre le traitement de la tâche T3.

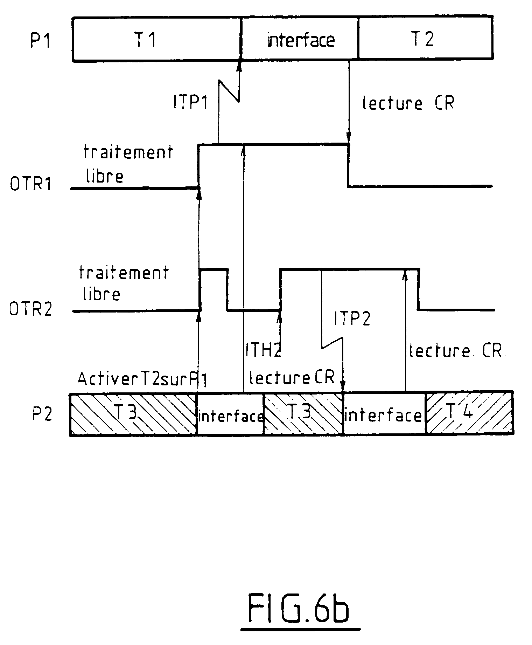

La figure 6b illustre d'une façon analogue à la précédente l'exécution par le processeur P2 d'une primitive distante sur le processeur P1 provoquant un changement de tâche sur le processeur P1 et l'expiration d'un délai sur le circuit OTR2 provoquant un changement de tâche sur le processeur P2.

Initialement, le processeur P1 exécute la tâche T1 tandis que le processeur P2 exécute la tâche T3 qui, à un instant donné, demande à l'opérateur OTR d'activer la tâche T2 sur le processeur P1.

Les deux composants OTR1 et OTR2 commencent à traiter la primitive.

Le composant OTR2 analyse les paramètres envoyés par le processeur P2 et se rend compte que ce n'est pas lui qui gère la tâche T2 à activer : il repasse donc rapidement à l'état "libre".

Le composant OTR1 fait passer la tâche T2 à l'état "éligible" et détecte que la tâche T2 est plus prioritaire que la tâche T1 en cours sur le processeur P1 : il émet donc une interruption ITP1 vers le processeur P1 pour lui signaler un changement de tâche en cours. Le processeur P1 prend en compte l'interruption ITP1 et vient lire le compte-rendu lui indiquant de suspendre la tâche T1 et d'élire la tâche T2. L'interface réalise le changement de contexte et le processeur P1 commence à exécuter la tâche T2. Pendant ce temps, de façon indépendante du processeur P1, le processeur P2 est venu lire le compte-rendu de sa primitive d'activation ; comme c'est le composant OTR1 qui a traité la primitive, c'est lui va lui répondre un compte-rendu indiquant que la primitive s'est correctement déroulée. Le processeur P2 va alors reprendre le traitement de la tâche T3.

Alors que le composant OTR1 est encore en train de traiter la primitive d'activation de la tâche T2, le composant OTR2 détecte l'expiration d'un délai qui réveille la tâche T4.

L'automate "horloge" envoie le signal ITH2 vers le séquenceur du composant OTR2, qui démarre immédiatement le traitement puisqu'il est "libre"'. Le composant OTR2 fait passer la tâche T4 à l'état "éligible" et détecte que la tâche T4 est plus prioritaire que la tâche T3 en cours sur le processeur P2 : il émet donc une interruption ITP2 vers le processeur P2 pour lui signaler un changement de tâche en cours. Le processeur P2 prend en compte l'interruption ITP2 et vient lire le compte-rendu lui indiquant de suspendre la tâche T3 et d'élire la tâche T4. L'interface réalise le changement de contexte et le processeur P2 commence à exécuter la tâche T4.

On a sur cet exemple un parallélisme de traitement entre une primitive sur le composant OTR1 et un traitement local sur le composant OTR2.

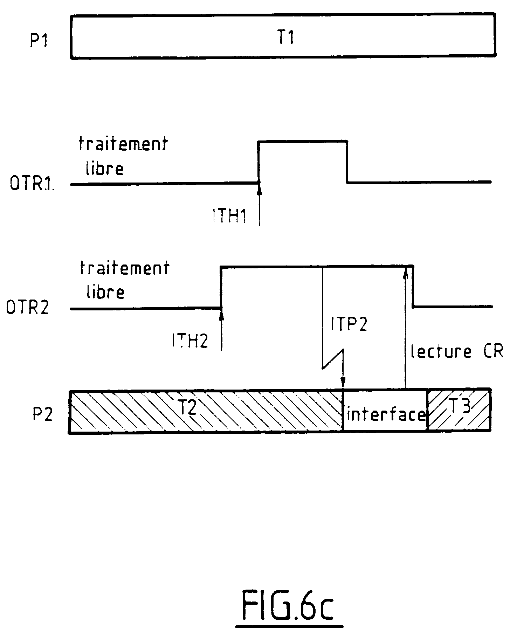

La figure 6c illustre le cas de traitements locaux simultanés sur les composants OTR1 et OTR2, provoquant un changement de tâche sur le processeur P2.

Initialement, le processeur P1 exécute la tâche T1, tandis que le processeur P2 exécute la tâche T2.

A peu près au même instant, le composant OTR2 détecte l'expiration d'un délai qui réveille la tâche T3, et le composant OTR1 détecte l'expiration d'un délai qui réveille la tâche T4. Les automates "horloge" des composants OTR1 et OTR2 envoient respectivement le signal ITH2 vers le séquenceur du composant OTR2, et le signal ITH1 vers le séquenceur du composant OTR1. Les deux composants OTR1 et OTR2 démarrent immédiatement leur traitement puisqu'ils sont "libres", sans avoir besoin de consulter l'état de l'autre composant puisqu'il s'agit d'un traitement local. Le composant OTR1 fait passer la tâche T4 à l'état "éligible" et détecte que la tâche T4 est moins prioritaire que la tâche T1 en cours sur le processeur P1 : il repasse donc à l'état "libre" sans interrompre le processeur P1 puisqu'il n'y a pas de changement de tâcne. Le traitement du composant OTR1 s'est fait de façon totalement transparente pour le processeur P1. De son côté, le composant OTR2 fait passer la tâche T3 à l'état "éligible" et détecte que la tâche T3 est plus prioritaire que la tâche T2 en cours sur le processeur P2 : il émet donc une interruption ITP2 vers le processeur P2 pour lui signaler un changement de tâche en cours. Le processeur P2 prend en compte l'interruption ITP2 et vient lire le compte-rendu lui indiquant de suspendre la tâche T2 et d'élire la tâche T3. L'interface réalise le changement de contexte, et le processeur P2 commence à exécuter la tâche T3.

Il faut remarquer que dans cet exemple, les composants OTR1 et OTR2 ont traité leur demande locale de façon tout à fait indépendante, et que le processeur P1 n'a pas été interrompu, puisque le traitement local sur le composant OTR1 n'a pas conduit à un changement de tâche sur le processeur P1.

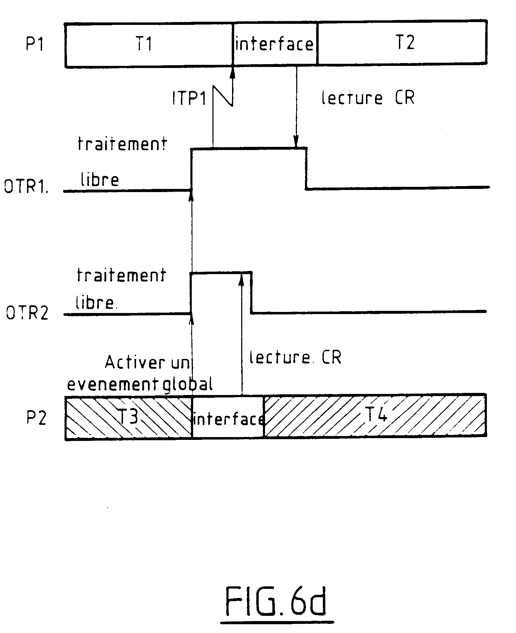

La figure 6d illustre le cas d'une primitive globale, provoquant un changement de tâche sur les processeurs P1 et P2.

Le processeur P1 exécute la tâche T1.

Le processeur P2 exécute la tâche T3 qui, à un instant donné, demande à l'opérateur OTR d'activer un événement global.

Les deux composant OTR1 et OTR2 commencent à traiter la primitive.

Le composant OTR1 fait passer la tâche T2 (qui était en attente de l'événement ) à l'état "éligible" et détecte que la tâche T2 est plus prioritaire que la tâche T1 en cours sur le processeur P1 : il émet donc une interruption ITP1 vers le processeur P1 pour lui signaler un changement de tâche en cours, puisque le processeur P1 qui exécute la tâche T1 n'est pas, à ce moment-là, en relation avec l'opérateur OTR.

Le processeur P1 prend en compte l'interruption ITP1 et vient lire le compte-rendu élaboré par le composant OTR1 lui indiquant de suspendre la tâche T1 et d'élire la tâche T2. Le composant OTR1 repasse alors à l'état "libre" cependant que l'interface réalise le changement de contexte , le processeur P1 commençant à exécuter la tâche T2.

Pendant ce temps, le composant OTR2 fait passer la tâche T4 (qui était en attente de l'événement) à l'état "éligible" et détecte que la tâche T4 est plus prioritaire que la tâche T3 en cours sur le processeur P2 : il élabore donc un compte-rendu signalant un changement de tâche en cours. Il n'a pas besoin d'émettre l'interruption ITP2, puisque c'est son processeur associé P2 qui a demandé la primitive : le processeur P2 va donc venir lire un compte-rendu. Lorsque le processeur P2 vient lire le compte-rendu de sa primitive d'activation d'événement, le composant OTR2 va lui renvoyer un compte-rendu indiquant que la primitive s'est correctement déroulée, et qu'il faut suspendre la tâche T3 au profit de la tâche T4. Le composant OTR2 repasse alors à l'état "libre" cependant que l'interface réalise le changement de contexte, le processeur P2 commençant à exécuter la tâche T4.

Il faut remarquer, sur cet exemple, que les deux composants OTR1 et OTR2 ont traité la même primitive en parallèle, chacun s'occupant de réveiller les tâches de son processeur associé en attente de l'événement. De plus, seul le composant OTR1 a eu besoin d'émettre une interruption ITP1 vers son processeur associé.

## Revendications

1. Dispositif pour l'optimalisation des performances de primitives temps réel d'un noyau d'exécutif temps réel dans une structure multiprocesseur comprenant plusieurs processeurs, ce dispositif comprenant un opérateur temps réel se comportant, vu d'un processeur de la structure, comme une zone mémoire et comprenant des moyens pour assurer une fonction OTR comportant l'émission et la réception des données à traiter, pour la génération des signaux de contrôle des échanges, pour la gestion du contexte temps réel des processeurs de la structure, pour associer aux objets gérés par un noyau, notamment les tâches, les événements matériels et logiciels, les ressources et le temps, une série de primitives, à raison d'une primitive à la fois, pour assurer la gestion de la ressource horloge et des ressources actives, pour gérer au moyen d'un ordonnanceur le contexte temps réel des processeurs de la structure en fonction d'une stratégie déterminée, cet ordonnanceur étant notamment prévu pour réveiller les tâches cycliquement, pour marquer des attentes sur délais, pour activer des tâches après délais, et pour décider le passage d'un état à un autre des tâches en fonction des primitives du contexte temps réel,
caractérisé en ce que le susdit opérateur temps réel OTR est réalisé sous la forme d'une pluralité de circuits câblés identiques dénommés circuits OTR, accessibles simultanément par les processeurs de la structure mais chacun associé à un seul de ces processeurs, ces circuits étant reliés entre eux par une liaison apte à transmettre un signal "accord" permettant d'assurer que l'opérateur temps réel n'exécute qu'une seule primitive à la fois, chaque circuit OTR comprenant un ordonnanceur apte à assurer la gestion des tâches uniquement du processeur qui lui est associé ainsi que des événements et des ressources globales à la fonction OTR, cet ordonnanceur étant notamment prévu pour réveiller les tâches cycliquement, pour marquer des attentes sur délais et pour activer les tâches après délais, l'opérateur OTR décidant le passage d'un état à un autre des tâches en fonction des primitives du contexte temps réel.

2. Dispositif selon la revendication 1,
caractérisé en ce que chaque circuit OTR se trouve dans l'un au moins des trois états suivants :
a) un premier état dans lequel il effectue le traitement d'une primitive demandée par un des processeurs de la structure,
b) un deuxième état dans lequel il effectue le traitement d'une demande locale interne au circuit ne concernant que les tâches dont il a la charge tel qu'une échéance d'un délai ou qu'une arrivée d'un événement matériel,
c) un troisième état dans lequel il est en attente de traitement.

3. Dispositif selon la revendication 2,
caractérisé en ce qu'il comprend des moyens destinés à faire en sorte que l'opérateur OTR n'accepte le traitement d'une primitive que si tous les circuits OTR sont en attente de traitement.

4. Dispositif selon l'une des revendications précédentes,
caractérisé en ce que l'échange entre la structure multiprocesseur et l'opérateur OTR s'effectue selon le processus suivant :
- demande d'accès à l'opérateur OTR par la structure, pour le traitement d'une primitive, ce mode comprenant la vérification préalable par la structure de la liberté d'accès à l'opérateur OTR, puis la réponse à cette vérification, par voie matérielle, de l'opérateur OTR à la structure,
- dans le cas où l'opérateur OTR est libre, l'envoi par la structure, du code et des paramètres de la primitive à l'opérateur OTR, par simple écriture à la zone d'adressage de l'opérateur OTR,
- l'exécution par l'opérateur OTR, après acquisition desdits codes et desdits paramètres d'une séquence opératoire relative à la primitive,
- la décision par l'opérateur OTR, en fonction de cette primitive et du contexte temps réel :
. d'élaborer la réponse au processeur qui a demandé la primitive,
. d'interrompre les processeurs sur lesquels la primitive a provoqué un changement de tâche, et
- la lecture de la réponse de l'opérateur OTR par le processeur ayant demandé la primitive et par les processeurs ayant reçu une interruption, cette lecture s'effectuant à l'adresse de l'opérateur OTR.

5. Dispositif selon la revendication 4,
caractérisé en ce que la susdite vérification est effectuée par un mécanisme de type "test and set" inclus dans l'opérateur OTR, qui est conçu de manière à transmettre au processeur de la structure qui fait une demande d'accès en lecture, une réponse représentative de l'état "libre" ou "occupé" de l'opérateur OTR.

6. Dispositif selon l'une des revendications précédentes,
caractérisé en ce que les composants OTR attribuent, chacun en fonction de leur stratégie, leur processeur associé à une de leurs tâches éligibles, de préférence la tâche la plus prioritaire pouvant s'exécuter sur ce processeur.

7. Dispositif selon l'une des revendications précédentes,
caractérisé en ce que chaque circuit OTR comprend au moins quatre automates (A1, A2, A3, A4) spécialisés dans la gestion de certains objets temps réel, en particulier, la gestion des tâches éligibles en attente de disponibilité de leur processeur, la gestion des échanges avec les processeurs, la gestion des délais, des cycles et de l'horloge temps réel, des files d'attente des ressources, de l'ensemble des tâches en attente d'événement et la prise en compte des interruptions externes, ces automates communiquant entre eux par des BUS internes au circuit OTR, interconnectés par un routeur dynamique, sous contrôle du séquenceur contenu dans l'un desdits automates.

8. Dispositif selon l'une des revendications précédentes,
caractérisé en ce que les circuits OTR sont regroupés sur une même carte connectée au BUS commun reliant tous les processeurs de la structure, avec un interface commun sur le BUS.

9. Dispositif selon l'une des revendications 1 à 7,
caractérisé en ce que chaque circuit OTR est installé au niveau de la carte du processeur dont il gère les tâches, avec un interface au BUS commun de la structure multiprocesseur.

10. Dispositif selon l'une des revendications 1 à 7,
caractérisé en ce que chaque circuit OTR est implanté au niveau du processeur dont il gère les tâches, avec un interface au BUS local, de manière à ce que lorsqu'un processeur de la structure multiprocesseur exécute une primitive, il envoie ses paramètres au circuit OTR associé, par le BUS local et, simultanément, aux autres circuits OTR par le BUS commun, et en ce qu'il comprend une logique d'arbitrage du BUS commun qui assure la prise de possession du BUS local de tous les circuits OTR, au cours d'un accès unique.

11. Dispositif selon l'une des revendications 7 à 10,
caractérisé en ce que chacun desdits automates (Ai) comprend une unité de traitement (UTi) et au moins un registre d'entrée (Ei) et un registre de sortie (Si), la connexion entre les sorties et les entrées des automates étant réalisée par un routeur dynamique, un ou plusieurs éléments de mémorisation sous forme par exemple de mémoire vive (RAMi) et un séquenceur câblé (SEQi).

12. Dispositif selon l'une des revendications précédentes,
caractérisé en ce que le circuit OTR comprend en outre au moins un dispositif d'échange pouvant être asynchrone, connectant le circuit OTR et l'interface (IBC) spécifique au BUS commun (BC), ainsi que des moyens pour émettre vers le processeur concerné un signal d'interruption, uniquement lorsque l'opérateur décrit un changement de tâche sur ce processeur, changement consécutif à un traitement interne tel qu'un délai ou un événement matériel ou à une primitive demandée par un processeur autre que celui dont le circuit OTR a la charge, ou bien encore à une exception temporelle tel qu'un dépassement d'un temps d'échéance ou d'exécution ou un cycle sur une tâche non terminée, ce signal d'interruption restant actif tant que le processeur n'a pas accédé à l'opérateur pour lire le code de l'opération à effectuer.

13. Dispositif selon l'une des revendications précédentes,
caractérisé en ce que l'un au moins des susdits automates comprend une horloge temps réel présentant une période programmable par appel d'une requête spécifique à l'opérateur, ainsi qu'une logique de comptage.

14. Dispositif selon la revendication 13,
caractérisé en ce que la susdite horloge temps réel (HTR) est conçue de manière à émettre un signal d'interruption (ITH) interne au circuit OTR déclenchant un traitement immédiat si le circuit OTR est en attente ou après la primitive en cours d'exécution.

15. Dispositif selon l'une des revendications 7 à 14,
caractérisé en ce que l'un au moins des susdits automates comprend des entrées de contrôle d'interruption externe (ITₑₓₜ), ainsi que des moyens de mise en forme et de mémorisation de ces signaux d'interruption, ces signaux d'interruption étant ensuite orientés vers un encodeur de priorité, et en ce que l'opérateur prend en compte l'interruption de plus forte priorité mémorisée à cet instant et remet à zéro les susdits moyens de mémorisation.

16. Dispositif selon la revendication 15,
caractérisé en ce que l'automate gérant les événements comprend en outre une mémoire de type RAM partiellement effaçable servant lors de l'arrivée d'un événement à accélérer la suppression des attentes d'événements pour toutes les tâches réveillées par l'événement traité.

## Patentansprüche

1. Vorrichtung zur Optimierung der Leistungen von Echtzeit-Primitiven eines Kerns einer Echtzeit-Exekutiven in einer Multiprozessor-Struktur mit mehreren Prozessoren, wobei diese Vorrichtung einen Echtzeit-Operator enthält, der sich von einem Prozessor der Struktur aus gesehen wie eine Speicherzone verhält, und Mittel aufweist zur Gewährleistung einer OTR-Funktion, die die Aussendung und den Empfang der zu verarbeitenden Daten enthält, zur Erzeugung der Steuersignale der Austauschvorgänge, zur Verwaltung des Echtzeit-Kontexts der Prozessoren der Struktur, zur Zuordnung einer Folge von Primitiven einzeln zu den von einem Kern verwalteten Objekten, insbesondere den Tasks, den Hardware- und den Software-Ereignissen, den Ressourcen und der Zeit, zur Verwaltung der Taktgeber-Ressource und der aktiven Ressourcen, zur Verwaltung des Echtzeit-Kontexts der Prozessoren der Struktur in Abhängigkeit von einer bestimmten Strategie mittels eines Betriebssystems, das insbesondere vorgesehen ist, um die Tasks zyklisch zu aktivieren, um die Wartezeiten auf Verzögerungen anzuzeigen, um Tasks nach Verzögerungen zu aktivieren und um den Übergang der Tasks von einem Zustand in einen anderen in Abhängigkeit von den Primitiven des Echtzeit-Kontexts zu bestimmen,
dadurch gekennzeichnet, daß der Echtzeit-Operator OTR von einer Vielzahl von "OTR-Schaltkreise" genannten, identischen, verdrahteten Schaltkreisen gebildet wird, die gleichzeitig allen Prozessoren der Struktur zugänglich, aber je nur einem einzigen dieser Prozessoren zugeordnet sind, wobei diese Schaltkreise miteinander über eine Verbindung verbunden sind, die ein Signal "ACCORD" (= Zustimmung) übertragen kann, das gewährleistet, daß der Echtzeit-Operator nur jeweils eine einzige Primitive ausführt, wobei jeder OTR-Schaltkreis ein Betriebssystem aufweist, das die Verwaltung der Tasks nur des ihm zugeordneten Prozessors sowie der Ereignisse und der globalen Ressourcen der OTR-Funktion gewährleisten kann, wobei dieses Betriebssystem insbesondere vorgesehen ist, um die Tasks zyklisch zu aktivieren, um Wartezeiten bei Verzögerungen anzuzeigen und um die Tasks nach Verzögerungen zu aktivieren, wobei der OTR-Operator den Übergang der Tasks von einem Zustand in den anderen in Abhängigkeit von den Primitiven des Echtzeit-Kontexts bestimmt.

2. Vorrichtung nach Anspruch 1, dadurch gekennzeichnet, daß jeder OTR-Schaltkreis sich in mindestens einem der drei folgenden Zustände befindet:
a) einem ersten Zustand, in dem er eine Primitive verarbeitet, die von einem der Prozessoren der Struktur angefordert wurde,
b) einem zweiten Zustand, in dem er eine Schaltkreis-interne, lokale Anforderung verarbeitet, die nur die Tasks betrifft, für die er verantwortlich ist, wie z.B. eine Ablauf einer Verzögerung oder ein Auftreten eines Hardware-Ereignisses,
c) einem dritten Zustand, in dem er auf eine Verarbeitung wartet.

3. Vorrichtung nach Anspruch 2, dadurch gekennzeichnet, daß sie Mittel aufweist, die bewirken sollen, daß der OTR-Operator nur dann die Verarbeitung einer Primitiven akzeptiert, wenn alle OTR-Schaltkreise auf eine Verarbeitung warten.

4. Vorrichtung nach einem der vorhergehenden Ansprüche, dadurch gekennzeichnet, daß der Austausch zwischen der Multiprozessor-Struktur und dem OTR-Operator gemäß dem folgenden Verfahren erfolgt: - Zugriffsforderung durch die Struktur an den OTR-Operator zur Verarbeitung einer Primitiven, wobei dieser Modus die vorhergehende Überprüfung durch die Struktur des freien Zugriffs auf den OTR-Operator und dann die Antwort auf diese Überprüfung über die Hardware vom OTR-Operator an die Struktur enthält,
- wenn der OTR-Operator frei ist, Aussendung des Kodes und der Parameter der Primitiven an den OTR-Operator durch die Struktur, durch einfaches Einschreiben in die Adressierzone des OTR-Operators,
- nach Erfassung der Kodes und der Parameter Durchführung einer Verfahrensfolge in Bezug auf die Primitive durch den OTR-Operator,
- Entscheidung durch den OTR-Operator, in Abhängigkeit von dieser Primitiven und dem Echtzeit-Kontext:
. die Antwort an den Prozessor auszuarbeiten, der die Primitive angefordert hat,
. die Prozessoren zu unterbrechen, bei denen die Primitive den Wechsel einer Task verursacht hat, und
- das Lesen der Antwort des OTR-Operators durch den Prozessor, der die Primitive angefordert hat, und durch die Prozessoren, die eine Unterbrechung empfangen haben, wobei dieses Lesen an der Adresse des OTR-Operators stattfindet.

5. Vorrichtung nach Anspruch 4, dadurch gekennzeichnet, daß die erwähnte Überprüfung von einem Mechanismus der Art "test and set" durchgeführt wird, der im OTR-Operator enthalten und so ausgebildet ist, daß er an den Prozessor der Struktur, der einen Lesezugriff fordert, eine Antwort überträgt, die repräsentativ ist für den "freien" oder "besetzten" Zustand des OTR-Operators.

6. Vorrichtung nach einem der vorhergehenden Ansprüche, dadurch gekennzeichnet, daß die OTR-Bauteile je in Abhängigkeit von ihrer Strategie ihren zugeordneten Prozessor einer ihrer wählbaren Tasks zuteilen, vorzugsweise der Task mit der höchsten Priorität, die in diesem Prozessor durchgeführt werden kann.

7. Vorrichtung nach einem der vorhergehenden Ansprüche, dadurch gekennzeichnet, daß jeder OTR-Schaltkreis mindestens vier Automaten (A1, A2, A3, A4) aufweist, die auf die Verwaltung bestimmter Echtzeit-Objekte spezalisiert sind, insbesondere die Verwaltung der wählbaren Tasks, die auf eine Verfügbarkeit ihres Prozessors warten, die Verwaltung der Austauschvorgänge mit den Prozessoren, die Verwaltung der Verzögerungen, der Zyklen und des Echtzeit-Taktgebers, der Warteschlangen der Ressourcen, der Gesamtheit der auf ein Ereignis wartenden Tasks, und die Berücksichtigung der äußeren Unterbrechungen, wobei diese Automaten miteinander verbunden sind über interne Busleitungen des OTR-Schaltkreises, die über eine dynamische Leitwegsteuerung miteinander verbunden sind unter der Kontrolle des in einem dieser Automaten enthaltenen Folgeschalters.

8. Vorrichtung nach einem der vorhergehenden Ansprüche, dadurch gekennzeichnet, daß die OTR-Schaltkreise auf einer Karte zusammengefaßt sind, die mit dem gemeinsamen Bus verbunden ist, der alle Prozessoren der Struktur miteinander verbindet, mit einer gemeinsamen Schnittstelle auf dem Bus.

9. Vorrichtung nach einem der Ansprüche 1 bis 7, dadurch gekennzeichnet, daß jeder OTR-Schaltkreis auf der Karte des Prozessors angeordnet ist, dessen Tasks er verwaltet, mit einer Schnittstelle mit dem gemeinsamen Bus der Multiprozessor-Struktur.

10. Vorrichtung nach einem der Ansprüche 1 bis 7, dadurch gekennzeichnet, daß jeder OTR-Schaltkreis in Höhe des Prozessors angeordnet ist, dessen Tasks er verwaltet, mit einer Schnittstelle zum lokalen Bus, so daß ein Prozessor der Multiprozessor-Struktur, wenn er eine Primitive ausführt, seine Parameter an den zugeordneten OTR-Schaltkreis über den lokalen Bus und gleichzeitig an die anderen OTR-Schaltkreise über den gemeinsamen Bus sendet, und daß er eine Arbiter-Logik der gemeinsamen Busleitung enthält, die die Inanspruchnahme der lokalen Busleitung aller OTR-Schaltkreise während eines einzigen Zugriffs gewährleistet.

11. Vorrichtung nach einem der Ansprüche 7 bis 10, dadurch gekennzeichnet, daß jeder der Automaten (Ai) eine Verarbeitungseinheit (UTi) und mindestens ein Eingangsregister (Ei) und ein Ausgangsregister (Si) aufweist, wobei die Verbindung zwischen den Ausgängen und den Eingängen der Automaten durch eine dynamische Leitwegsteuerung, mindestens ein Speicherelement z.B. in Form eines Lebendspeichers (RAMi) und eine verdrahteten Folgeschaltung (SEQi) erfolgt.

12. Vorrichtung nach einem der vorhergehenden Ansprüche, dadurch gekennzeichnet, daß der OTR-Schaltkreis weiter mindestens eine Austauschvorrichtung aufweist, die asynchron sein kann und den OTR-Schaltkreis und die für den gemeinsamen Bus (BC) spezifische Schnittstelle (IBC) verbindet, sowie Mittel, um zum betroffenen Prozessor ein Unterbrechungssignal nur dann zu senden, wenn der Operator einen Task-Wechsel in diesem Prozessor beschreibt, Wechsel aufgrund einer inneren Verarbeitung wie z.B. einer Verzögerung oder eines Hardware-Ereignisses, oder aufgrund einer Primitiven, die von einem anderen Prozessor als dem verlangt wird, für den der OTR-Schaltkreis verantwortlich ist, oder auch aufgrund einer zeitlichen Ausnahme wie z.B. einer Überschreitung einer Ablauf- oder einer Ausführungszeit oder einem Zyklus bei einer nicht beendeten Task, wobei dieses Unterbrechungssignal aktiv bleibt, solange der Prozessor keinen Zugriff zum Operator hatte, um den Kode der durchzuführenden Operation zu lesen.

13. Vorrichtung nach einem der vorhergehenden Ansprüche, dadurch gekennzeichnet, daß mindestens einer der Automaten einen Echtzeit-Taktgeber, der eine durch Aufruf einer spezifischen Forderung an den Operator programmierbare Periode enthält, sowie eine Zähllogik aufweist.

14. Vorrichtung nach Anspruch 13, dadurch gekennzeichnet, daß der Echtzeit-Taktgeber (HTR) so ausgebildet ist, daß er ein internes Unterbrechungssignal (ITH) des OTR-Schaltkreises aussendet, das eine sofortige Verarbeitung auslöst, wenn der OTR-Schaltkreis in Wartestellung ist, oder nach der gerade ausgeführt werdenden Primitiven.

15. Vorrichtung nach einem der Ansprüche 7 bis 14, dadurch gekennzeichnet, daß mindestens einer der Automaten Kontrolleingänge (ITₑₓₜ) für die äußere Unterbrechung sowie Mittel zur Formgebung und zur Speicherung dieser Unterbrechungssignale aufweist, wobei diese Unterbrechungssignale dann zu einem Prioritätskodierer geleitet werden, und daß der Operator die Unterbrechung höchster Priorität berücksichtigt, die zu diesem Zeitpunkt gespeichert ist, und die Speichermittel auf Null setzt.

16. Vorrichtung nach Anspruch 15, dadurch gekennzeichnet, daß der die Ereignisse verwaltende Automat außerdem einen teilweise löschbaren RAM-Speicher aufweist, der bei Auftreten eines Ereignisses dazu dient, die Unterdrückung des Wartens auf Ereignisse für alle Tasks zu beschleunigen, die vom verarbeiteten Ereignis angeregt werden.

## Claims

1. Device for optimizing the performance of real-time primitives of an executive kernel in a multiprocessor structure comprising several processors, said device comprising a real time operator behaving, as seen from a processor of said structure, as a memory area and comprising means for implementing a real time operator function comprising the sending and the receiving of data to be processed, for generating communication control signals, for managing the real time context of said processors of said structure, for associating with the objects managed by a kernel, especially tasks, hardware and software events, resources and time, a series of primitives one primitive at a time to handle the management of the clock resource and of the active resources, for managing the real time context of said processors of said structure on the basis of a predetermined strategy by means of a scheduler, said scheduler being adapted in particular to activate the tasks cyclically, for marking waits on timers, for activating tasks after timers, and for deciding to change the state of a task to another state on the basis of the primitives of the real time context,
characterized in that said real time operator comprises a plurality of identical hardwired real time operator circuits accessible simultaneously by said processors of said structure but each associated with one only of said processors, said circuits being interconnected by a link adapted to transmit an "AGREED" signal whereby it is possible to ensure that said real time operator executes only one primitive at a time, each real time operator circuit comprising a scheduler adapted to manage the tasks of only the processor associated with it and global resources and events of the real time operator function, said scheduler being adapted in particular to activate the tasks cyclically, to mark waits on timers and to activate tasks after timers, said real time operator deciding to change the task state on the basis of primitives of the real time context.

2. Device according to claim 1
characterized in that each real time operator circuit is in at least one of the following three states:
a) a first state in which it processes a primitive requested by one of said processors of said structure,
b) a second state in which it processes a local request internal to the circuit concerning only tasks for which it is responsible, such as expiry of a timer or occurrence of a hardware event,
c) a third state in which it is awaiting processing.

3. Device according to claim 2
characterised in that it comprises means whereby said real time operator accepts processing of a primitive only if all said real time operator circuits are awaiting processing.

4. Device according to one of the preceding claims,
characterized in that communication between said multiprocessor structure and said real time operator is by way of the following process:
- request for access to said real time operator by said structure to process a primitive, this mode comprising verification beforehand by said structure of free access to said real time operator and subsequent hardware response to said verification from said real time operator to said structure,
- if said real time operator is free, sending by said structure of the code and of the parameters of the real time operator primitive merely by writing the real time operator addressing area,
- execution by said real time operator after acquisition of said codes and of said parameters of an operational sequence relating to said primitive,
- the decision by said real time operator, on the basis of said primitive and of said real time context:
. to produce the response to the processor which requested said primitive,
. to interrupt the processors on which said primitive has caused a change of task, and
- reading of the real time operator response by the processor which requested said primitive and by the processors which have received an interrupt, at the real time operator address.

5. Device according to claim 4
characterized in that said verification is carried out by a "test and set" type mechanism included in said real time operator which is adapted to send to the structure processor which requests access in read mode a response representative of the "free" or "busy" state of said real time operator.

6. Device according to one of the preceding claims,
characterized in that said real time operator components each allocate according to their own strategy their associated processor to one of their eligible tasks, preferably the task capable of being executed on said processor which has the highest priority.

7. Device according to one of the preceding claims
characterized in that each real time operator circuit comprises at least four automatic devices (A1, A2, A3, A4) dedicated to the management of specific real time objects, in particular management of eligible tasks awaiting availability of their processor, management of communications with processors, management of timers, cycles and the real time clock, resource queues, all tasks awaiting an event and processing of external interrupts, said automatic devices communicating with each other via buses internal to said real time operator circuit interconnected by a dynamic router under the control of the sequencer included in one of said automatic devices.

8. Device according to one of the preceding claims,
characterized in that said real time operator circuits are combined on a common circuit board connected to the common bus interconnecting all said processors of said structure with a common interface to said bus.

9. Device according to one of claims 1 to 7,
characterized in that each real time operator circuit is on the circuit board of the processor whose tasks it manages with an interface to the common bus of said multiprocessor structure.

10. Device according to one of claims 1 to 7,
characterized in that each real time operator circuit is colocated with the processor whose tasks it manages with an interface to the local bus so that when a processor of said multiprocessor structure executes a primitive it sends its parameters to the associated real time operator circuit via said local bus, and simultaneously to the other real time operator circuits via said common bus, and in that it comprises common bus arbiter logic which assures taking possession of said local bus of all said real time operator circuits during a single access.

11. Device according to one of claims 7 to 10,
characterized in that each of said automatic devices (Ai) comprises a processor unit (UTi) and at least one input register (Ii) and one output register (Oi) and said automatic device outputs and inputs are interconnected by a dynamic router, one or more memory elements in the form of random access memory (RAMi) , for example, and a hardwired sequencer (SEQi).

12. Device according to one of the preceding claims,
characterized in that said real time operator circuit further comprises at least one communication device, possibly an asynchronous communication device, connecting said real time operator- circuit and said common bus (CB) dedicated interface (CBI) and means for sending an interrupt signal to the processor concerned only when said operator defines a change of task on said processor after internal processing,such as a timer or hardware event, or after a primitive requested by a processor other than that for which said real time operator circuit is responsible, or after a temporal exception, such as completion time or execution time exceeded, or a cycle on a task not finished, said interrupt signal remaining active until said processor has accessed said operator to read the code of the operation to be performed.

13. Device according to one of the preceding claims,
characterized in that at least one of said automatic devices comprises a real time clock having a period programmable by invoking a specific request to said operator and counting logic.

14. Device according to claim 13,
characterized in that said real time clock (RTC) is adapted to send an internal interrupt signal (CTI) to said real time operator circuit initiating immediate processing if said real time operator circuit is waiting or after the primitive currently being executed.

15. Device according to one of claims 7 to 14,
characterized in that at least one of said automatic devices comprises external interrupt control inputs (ITₑₓₜ) and means for shaping and memorizing said interrupt signals which are then routed to a priority encoder, and in that said operator processes the highest priority interrupt stored at this time and resets said memory means.

16. Device according to claim 15,
characterized in that said automatic device managing events further comprises a partially erasable random access memory used when an event occurs to accelerate the clearing of waits on events for all the tasks activated by the event processed.
